(19) Europäisches Patentamt
European Patent Office
Office européen des brevets

(11) EP 0 401 629 B1

(12) # EUROPÄISCHE PATENTSCHRIFT

(45) Veröffentlichungstag und Bekanntmachung des Hinweises auf die Patenterteilung:
**01.03.2000 Patentblatt 2000/09**

(51) Int. Cl.7: **C08L 69/00**, C08L 25/02, C08L 33/06, C08L 51/04

(21) Anmeldenummer: **90110032.1**

(22) Anmeldetag: **26.05.1990**

(54) **Hochwärmeformbeständige Polycarbonat/ABS-Mischungen**
High heat resistant polycarbonate-A.B.S. blends
Mélanges de polycarbonate/ABS à haute stabilité thermique

(84) Benannte Vertragsstaaten:
**DE ES FR GB IT NL**

(30) Priorität: **09.06.1989 DE 3918895**

(43) Veröffentlichungstag der Anmeldung:
**12.12.1990 Patentblatt 1990/50**

(73) Patentinhaber: **BAYER AG**
**51368 Leverkusen (DE)**

(72) Erfinder:
- **Eckel, Thomas, Dr.**
  **D-4047 Dormagen 1 (DE)**
- **Wittmann, Dieter, Dr.**
  **D-5000 Koeln 80 (DE)**
- **Freitag, Dieter, Dr.**
  **D-4150 Krefeld (DE)**
- **Westeppe, Uwe, Dr.**
  **D-4020 Mettmann (DE)**
- **Ott, Karl-Heinz, Dr.**
  **D-5090 Leverkusen 1 (DE)**

(56) Entgegenhaltungen:
**EP-A- 0 142 693**
**EP-A- 0 164 476**
**EP-A- 0 303 075**
**EP-A- 0 362 646**
**JP-A- 60 252 650**
**US-A- 3 398 212**
**US-A- 4 469 833**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 401 629 B1

## Beschreibung

Die Erfindung betrifft als thermoplastische Formmassen geeignete Gemische aus aromatischen Polycarbonaten auf Basis von substituierten Dihydroxydiphenylcycloalkanen, Copolymerisaten harzbildender Vinylverbindungen und Pfropfpolymerisaten harzbildender Monomerer auf Dienkautschuke, ein Verfahren zu ihrer Herstellung und ihre Verwendung zur Herstellung von Formkörpern.

Polycarbonat/ABS-Gemische und ihre Verwendung als Formmassen sind bekannt. Sie enthalten im allgemeinen ein Bisphenol-A-Polycarbonat, ein Styrol/Acrylnitril-Copolymerisat und ein Pfropfcopolymerisat z.B. von Styrol und Acrylnitril auf einen Dienkautschuk als Schlagzähmodifikator. Diese Formmassen zeichnen sich durch gute Kerbschlagzähigkeit (auch bei tiefen Temperaturen) und leichte Verarbeitbarkeit (gutes Fließverhalten) aus. Ihre Wärmeformbeständigkeit reicht allerdings für einige Anwendungen nicht aus, nämlich wenn Temperaturen von mehr als 120°C auftreten können (z.B. für die Herstellung von Außenteilen für Kraftfahrzeuge, die Lackiertemperaturen von > 120°C vertragen müssen).

Es wurde gefunden, daß die Wärmeformbeständigkeit von Mischungen aus aromatischen Polycarbonaten, Styrol/Acrylnitril-Copolymerisaten und bepfropften Dienkautschuken wesentlich verbessert wird, wenn man spezielle Polycarbonate auf Basis bestimmter substituierter Dihydroxydiphenylcycloalkane verwendet. Die hohe Kerbschlagzähigkeit dieser Formmassen bleibt erhalten.

Gegenstand der vorliegenden Erfindung sind somit als thermoplastische Formmassen geeignete Mischungen aus:

A. 3 bis 99, vorzugsweise 40 bis 98, insbesondere 60 bis 97 Gew.-Teilen, eines aromatischen Polycarbonats, dessen bifunktionelle Carbonatstruktureinheiten zu mindestens 20 Mol-% der Formel (I) entsprechen

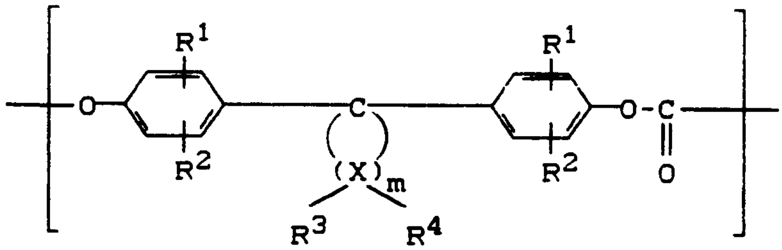

(I),

worin

| | |
|---|---|
| $R^1$ und $R^2$ | unabhängig voneinander Wasserstoff, Halogen, bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5, ist, |
| $R^3$ und $R^4$ | für jedes X individuell wählbar sind und unabhängig voneinander Wasserstoff oder $C_1$-$C_6$-Alkyl bedeuten und |
| X | Kohlenstoff bedeutet, |

mit der Maßgbe, daß an mindestens einem Atom X $R^3$ und $R^4$ gleichzeitig Alkyl bedeuten,

B. 3 bis 95, vorzugsweise 5 bis 50 Gew.-Teilen, eines Copolymerisats aus

B.1 50 bis 98, vorzugsweise 60 bis 95 Gew.-% Styrol, α-Methylstyrol, kernsubstituierten Styrolen, $C_1$-$C_8$-Alkylmethacrylaten, $C_1$-$C_8$-Alkylacrylaten oder Mischungen daraus und

B.2 50 bis 2, vorzugsweise 40 bis 5 Gew.-% Acrylnitril, Methacrylnitril, $C_1$-$C_8$-Alkylmethacrylaten, $C_1$-$C_8$-Alkylacrylaten, Maleinsäureanhydrid, N-substituierten Maleinimiden und Mischungen daraus,

C. 1 bis 95, vorzugsweise 2 bis 60, insbesondere 3 bis 40 Gew.-Teilen, eines Pfropfpolymerisats von

C.1. 5 bis 90, vorzugsweise 20 bis 80 Gew.-Teilen einer Mischung aus

C.1.1 50 bis 98, vorzugsweise 60 bis 95 Gew.-% Styrol, α-Methylstyrol, $C_1$-$C_4$-Alkyl- oder Halogen-kernsubstituierten Styrolen, $C_1$-$C_8$-Alkylmethacrylaten, $C_1$-$C_8$-Alkylacrylaten oder Mischungen daraus und

C.1.2 5 bis 50, vorzugsweise 5 bis 40 Gew.-% Acrylnitril, Methacrylnitril, $C_1$-$C_8$-Alkylmethacrylaten, $C_1$-$C_8$-Alkylacrylaten, Maleinsäureanhydrid, $C_1$-$C_4$-Alkyl- oder Phenyl-N-substituierten Maleinimiden oder Mischungen daraus auf

C.2 10 bis 95, vorzugsweise 20 bis 80 Gew.-Teile Dienkautschuk mit einem mittleren Teilchendurchmesser ($d_{50}$) von 0,09 bis 1, vorzugsweise 0,09 bis 0,6 µm und einem Gelgehalt vor mehr als 50, vorzugsweise mehr als 70, insbesondere 73 bis 98 Gew.-%, wobei die Pfropfpolymerisate mit Hilfe von Radikalinitiatoren ausgewählt aus Hydroperoxider und Persulfaten erhältlich sind, und

D. 0 bis 80 Gew.-Teile, bevorzugt 5 bis 75 Gew.-Teile eines weiteren, von A verschiedenen aromatischen Polycarbonats.

Polycarbonate A

Polycarbonate A im Sinne der Erfindung sind hochmolekulare, thermoplastische, aromatische Polycarbonate mit Molekulargewichten $\overline{M}w$ (Gewichtsmittel) von mindestens 10 000, vorzugsweise von 20 000 bis 300 000, deren bifunktionelle Carbonatstruktureinheiten zu mindestens 20 Mol-% der Formel (I) entsprechen

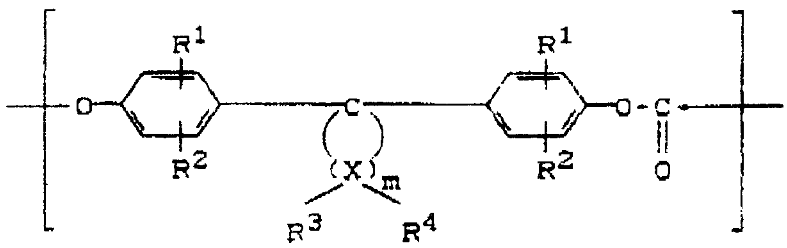

(I),

worin

$R^1$, $R^2$, $R^3$, $R^4$, m und X die zuvor genannte Bedeutung besitzen.

Ausgangsprodukte für die Polycarbonate A sind Dihydroxydiphenylcycloalkane der Formel (II)

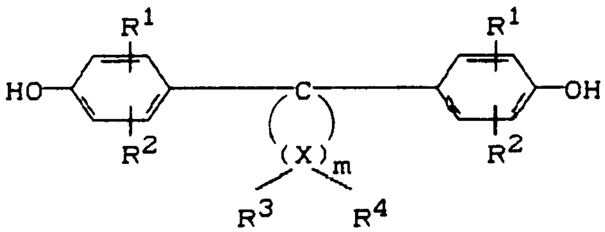

(II),

worin

X, $R^1$, $R^2$, $R^3$, $R^4$ und m die für Formel (I) genannte Bedeutung haben.

Bevorzugt sind an 1 - 2 Atomen X, insbesondere nur an einem Atom X, $R^3$ und $R^4$ gleichzeitig Alkyl. Besonders bevorzugter Alkylrest ist Methyl; die X-Atome in α-Stellung zu dem diphenylsubstituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (II)), beispielsweise die Diphenole der Formeln (IIa) bis (IIc),

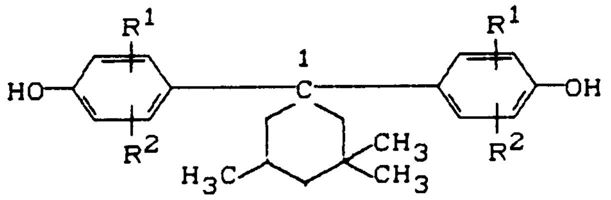

(IIa),

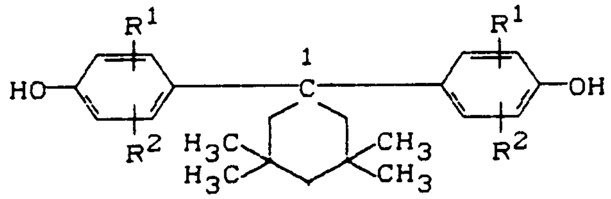

(IIb),

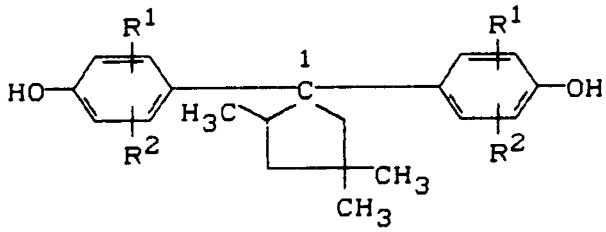

(IIc),

wobei das 1,1-Bis-(4-hydroxyphenyl)-3,3,5-trimethylcyclohexan (Formel (IIa) mit $R^1$ und $R^2$ gleich H) besonders bevorzugt ist.

Die Polycarbonate A können gemäß der Deutschen Offenlegungsschrift 3 832 396 aus Diphenolen der Formel (II) hergestellt werden.

Es können sowohl ein Diphenol der Formel (II) unter Bildung von Homopolycarbonaten als auch mehree Diphenole der Formel (II) unter Bildung von Copolycarbonaten verwendet werden.

Außerdem können die Diphenole der Formel (II) auch im Gemisch mit anderen Diphenolen, beispielsweise mit denen der Formel

HO-Z-OH (III)

zur Herstellung von hochmolekularen, thermoplastischen, aromatischen Polycarbonaten verwendet werden.

Geeignete andere Diphenole der Formel (III) sind solche, in denen Z ein aromatischer Rest mit 6 bis 30 C-Atomen ist, der einen oder mehrere, gegebenenfalls substituierte aromatische Kerne enthalten kann. Bei mehrkernigen aromatischen Dihenolen der Formel (III) können die aromatischen Kerne durch $C_1$-$C_6$-Alkyliden- oder $C_5$-$C_6$-Cycloalkylidenreste, wobei die Cycloalkylidenreste sich von denen der Formeln (I) und (II) unterscheiden, oder durch Heteroatome, wie O, S, N, verbunden (verbrückt) sein.

Beispiele für Diphenole der Formel (III) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Diese und weitere geeignete andere Diphenole sind z.B. in den US-S 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Plastics of Polycarbonates, Interscience Publishers, New York 1964", beschrieben.

Bevorzugte andere Diphenole sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha'$-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (III) sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan (Bis-phenol A) bevorzugt.

Die anderen Diphenole der Formel (III) können sowohl einzeln als auch im Gemisch eingesetzt werden.

Das molare Verhältnis von Diphenolen der Formel (II) zu den gegebenenfalls mitzuverwendenden anderen Diphenolen der Formel (III) in den hier bevorzugten Polycarbonaten ist 100:0 bis 20:80, bevorzugt 80:20 bis 25:75 und insbesondere 60:40 bis 30:70.

Die Polycarbonate A können nach allen für Polycarbonate bekannten Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn Verzweigung gewünscht wird, kann sie in bekannter Weise durch Einkondensieren geringer Mengen, vorzugsweise Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind:

Phloroglucin,

4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4',4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IV) geeignet

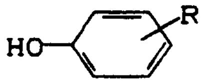

(IV),

worin

R einen verzweigten $C_8$- oder $C_9$-Alkylrest darstellt.

Bevorzugt ist im Alkylrest R der Anteil an $CH_3$-Protonen 47 bis 89 % und der Anteil der CH- und $CH_2$-Protonen 53 bis 11 %; ebenfalls bevorzugt ist R in o- oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise durch Phasengrenzflächenpolykondensation (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (II) in wäßrig alkalischer Phase gelöst. Zur Herstellung von Copolycarbonaten mit anderen Diphenolen werden Gemische von Diphenolen der Formel (II) und den anderen Diphenolen, beispielsweise denen der Formel (III), eingesetzt. Zur Regulierung des Molekulargewichts können Kettenabbrecher z.B. der Formel (IV) zugegeben werden. Dann wird in Gegenwart einer inerten, vorzugsweise Polycarbonat lösenden, nicht mischbaren organischen Flüssigkeit mit Phosgen nach der Methode der Phasengrenzflächenkondensation umgesetzt. Die Reaktionstemperatur ist 0°C bis 40°C.

Die gegebenenfalls mitverwendeten Verzweiger können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (II) und gegebenenfalls anderen Diphenolen der Formel (III) können auch deren Mono- und/ oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (II) und gegebenenfalls Formel (III); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate A durch Phasengrenzflächenpolykondensation kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf eingesetzte Diphenole, vorhanden sein. Die Katalysatoren können vor Beginn der Phosgenierung oder während oder auch nach der Phosgenierung zugesetzt werden.

Die Polycarbonate A können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate A haben insbesondere Molekulargewichte $\overline{M}w$ (Gewichtsmittel, ermittelt durch Gelchromatogrphie nach vorheriger Eichung) von 20 000 bis 80 000. Sie können linear oder verzweigt sein, sie sind Homopolycarbonate oder Copolycarbonate auf Basis der Diphenole der Formel (II).

Copolymerisate B

Erfindungsgemäß einsetzbare Copolymerisate B sind solche aus wenigstens einem Monomeren B.1: Styrol, α-Methylstyrol und/oder kernsubstituierten Styrolen, $C_1$-$C_8$-Alkylmethacrylat, $C_1$-$C_8$-Alkylacrylat und wenigstens einem Monomeren B.2: Acrylnitril, Methacrylnitril, $C_1$-$C_8$-Alkylmethacrylat, $C_1$-$C_8$-Alkylacrylat, Maleinsäureanhydrid und/oder N-substituiertem Maleinimid.

Besonders bevorzugt sind Acrylsäuremethylester, -ethylester und -propylester sowie Methylmethacrylat.

Thermoplastische Copolymerisate mit einer Zusammensetzung gemäß B können bei der Herstellung der Pfropfpolymerisate C als Nebenprodukte entstehen, besonders, wenn große Mengen Monomere auf kleine Mengen Kautschuk gepfropft werden. Die erfindungs gemäß einzusetzende Menge an Copolymerisat B bezieht diese Nebenprodukte der Pfropfpolymerisation nicht mit ein.

Die Copolymerisate B sind harzartig, thermoplastisch und kautschukfrei.

Die thermoplastischen Copolymerisate B enthalten einpolymerisiert 50 bis 98, vorzugsweise 60 bis 95 Gew.-% B.1 und 50 bis 2, vorzugsweise 40 bis 5 Gew.-% B.2.

Besonders bevorzugte Copolymerisate B sind solche aus Styrol und Acrylnitril und gegebenenfalls Methylmethacrylat; aus α-Methylstyrol und Acrylnitril und gegebenenfalls Methylmethacrylat; sowie aus Styrol und α-Methylstyrol mit Acrylnitril und gegebenenfalls Methylmethacrylat.

Die Styrol-Acrylnitril-Copolymerisate B sind bekannt und lassen sich durch radikalische Polymerisation, insbesondere durch Emulsions-, Suspensions-, Lösungs- oder Massepolymerisation herstellen. Die Copolymerisate B besitzen vorzugsweise Molekulargewichte $\overline{M}_w$ (Gewichtsmittel, ermittelt durch Lichtstreuung oder Sedimentation) von 15 000 bis 200 000.

Besonders bevorzugte erfindungsgemäße Copolymerisate B sind auch statistisch aufgebaute Copolymerisate aus Styrol und Maleinsäureanhydrid, die durch eine kontinuierliche Masse- oder Lösungspolymerisation bei unvollständigen Umsätzen aus dem entsprechenden Monomeren hergestellt werden können.

Die Anteile der beiden Monomerbausteine der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrideinheiten ist 5 bis 25 Gew.-%.

Die Molekulargewichte $\overline{M}_n$ (Zahlenmittel) der erfindungsgemäß geeigneten statistisch aufgebauten Styrol-Maleinsäureanhydrid-Copolymeren B können über einen weiten Bereich variieren. Bevorzugt ist 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Copolymerisate B auch kernsubstituierte Styrole wie p-Methylstyrol, Vinyltoluol, 2,4-Dimethylstyrol, und andere substituierte Styrole wie α-Methylstyrol polymerisiert enthalten.

Pfropfpolymerisate C

Zur Herstellung der Pfropfpolymerisate C als Pfropfgrundlage geeignete Dienkautschuke C.2 sind insbesondere Polybutadien, Butadien-Copolymerisate mit bis zu 30 Gew.-%, bezogen auf das Kautschukgewicht, anderen ethylenisch ungesättigten Monomeren, wie Styrol oder Acrylnitril, oder Estern von Acryl- oder Methacrylsäure mit $C_1$-$C_4$-Alkoholen, wie Methylmethacrylat, Ethylacrylat, Methylacrylat oder Ethylmethacrylat, Polyisopren oder Polychloropren. Die bevorzugte Pfropfgrundlage besteht aus reinem Polybutadien.

Diese Kautschuke liegen in Form wenigstens partiell vernetzter Teilchen eines mittleren Teilchendurchmessers von 0,09 bis 1 µm, insbesondere 0,1 bis 0,6 µm vor.

Die Pfropfpolymerisate C können durch radikalische Pfropfpolymerisation erhalten werden,

Zur Herstellung des Pfropfpolymerisates C werden die Pfropfmonomeren C.1.1 und C.1.2 in Anwesenheit des Kautschuks C.2 radikalisch pfropfpolymerisiert, insbesondere bei 40 bis 90°C. Die Pfropfpolymerisation kann in Suspension, Dispersion oder bevorzugt in Emulsion kontinuierlich oder diskontinuierlich durchgeführt werden. Zur Pfropfpolymerisation werden Radikalinitiatoren ausgewählt aus Hydroperoxiden und Persulfaten sowie gegebenenfalls anionische Emulgatoren, z.B. Carboxoniumsalze, Sulfonsäuresalze oder organische Sulfate. Dabei bilden sich Pfropfpolymerisate mit hohen Pfropfausbeuten, d.h. ein großer Anteil des Polymerisates der Monomeren C.1 wird an den Kautschuk C.2 chemisch gebunden.

Die Pfropfpolymerisate C werden im allgemeinen durch Pfropfpolymerisation von 5 bis 90, vorzugsweise 20 bis 80 Gewichtsteilen der Monomeren C.1 auf 10 bis 95, vorzugsweise 20 bis 80 Gew.-Teile Kautschuk C.2 hergestellt,

Bevorzugte Monomerenmischungen bestehen aus 50 bis 95 Gew.-Teilen Styrol, α-Methylstyrol (oder anderen Alkyl- oder halogensubstituierten Styrolen) oder $C_1$-$C_8$-Alkylmethacrylaten, $C_1$-$C_8$-Alkylacrylaten und aus 5 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid oder substituierten Maleinimiden.

Besonders bevorzugt sind Acrylsäuremethyl-, -ethyl-, -propyl- und butylester sowie Methylmethacrylate.

Besonders bevorzugte gepfropfte Copolymerisate werden aus Styrol/ Acrylnitril oder Styrol/Maleinsäureanhydrid gewonnen. Als weitere Monomere können zusätzlich in kleinen Mengen Acrylsäureester von primären oder sekundären aliphatischen $C_1$-$C_8$-Alkoholen, vorzugsweise n-Butylacrylat, oder Acryl- oder Methacrylsäureester des tert.-Butanols, vorzugsweise t-Butylacrylat, anwesend sein.

Bevorzugte Pfropfcopolymerisate C sind z.B. mit Styrol und/oder Acrylnitril und/oder (Meth-)Acrylsäurealkylestern gepfropfte Polybutadiene oder Butadien/Styrol-Copolymerisate. Solche Copolymerisate sind beispielsweise in der DE-OS 1 694 173 (= US-PS 3 564 077) beschrieben.

Besonders bevorzugte Polymerisate C sind ABS-Polymerisate, wie sie in der DE-OS 2 035 390 (= US-PS 3 644 574) und in der DE-OS 2 248 242 (= GB-PS 1 409 275) beschrieben sind.

Die Pfropfpolymerisate C können aus ihren Latices nach bekannten Verfahren isoliert werden, z.B durch Koagulation der Latices mit Elektrolyten (Salzen, Säuren oder Gemischen davon) und anschließende Reinigung und Trocknung.

Bei der Herstellung der Pfropfpolymerisate C bilden sich im allgemeinen neben dem eigentlichen Pfropfcopolymerisat in bestimmtem Ausmaß auch freie Polymerisate oder Copolymerisate der die Pfropfhülle bildende Pfropfmonomeren. - Die Pfropfung ist nicht vollständig.

Mit Pfropfpolymerisaten C werden im Sinne der Erfindung die durch Polymerisation der Pfropfmonomeren C.1 in Gegenwart des Kautschukes C.2 erhaltenen Produkte bezeichnet, also im allgemeinen Gemische aus Pfropfcopolymerisat und freiem (CO-)Polymerisat der Pfropfmonomeren C.1.

Die erfindungsgemäßen Formmassen weisen optimale Eigenschaften auf, wenn die Menge an freiem (CO-)Polymerisat 50, vorzugsweise 30, insbesondere 20 Gew.-%, in den Pfropfpolymerisaten C, nicht übersteigt.

<u>Polycarbonate D</u>

Als aromatische Polycarbonate D können Homopolycarbonate und Copolycarbonate eingesetzt werden, wie z.B. in US-PS 2 999 835, GB-PS 772 627 und DE-OS 3 334 872 beschrieben. Besonders bevorzugt sind Polycarbonate auf Basis von Bisphenol A.

Die erfindungsgemäßen Formmassen können weitere, für aromatische Polycarbonate, Copolymerisate und Pfropfpolymerisate bekannte Zusätze wie Stabilisatoren, Pigmente, Entformungsmittel, Flammschutzmittel und Antistatika in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen wie Innenknetern, Extrudern oder Doppelwellenschnecken schmelzcompoundiert oder schmelzextrudiert. Die Bestandteile können nacheinander oder gleichzeitig gemischt werden.

Weiterer Gegenstand der Erfindung ist also ein Verfahren zur Herstellung der beschriebenen Formmassen durch Mischen ihrer Bestandteile bei erhöhter Temperatur.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Hausgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorhergestellten Platten oder Folien hergestellt werden.

Weiterer Gegenstand der Erfindung ist also die Verwendung der beschriebenen Formmassen zur Herstellung von Formkörpern.

<u>Beispiele</u>

Angegebene Teile bedeuten Gewichtsteile.

<u>Polycarbonate A</u>

A.1 Polycarbonat auf Basis Bisphenol A/1,1-Bis-(4-hydroxyphenyl)-3,3,5-trimethylcyclohexan (Molverhältnis 45:55):
Herstellung:
1,436,4 g (6,3 Mol) Bisphenol A (2,2-Bis-(4-hydroxyphenyl)-propan, 2387,0 g (7,7 Mol) 1,1-Bis-(4-hydroxyphenyl)-3,3,5-trimethylcyclohexan, 7476,0 g (84 Mol) 45%ige NaOH werden in 33,7 l Wasser unter Inertgas und unter Rühren gelöst. Dann wird eine Lösung von 36,9 g (0,392 Mol) Phenol in 11 l Methylenchlorid und 13 l Chlorbenzol zugefügt. In die gut gerührte Lösung werden bei pH 13 bis 14 und 21 bis 25°C 2772 g (28 Mol) Phosgen eingeleitet.

Danach werden 14 ml Ethylpiperidin zugegeben und noch 45 Minuten gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206°C bestimmt (DSC).

A.2 Polycarbonat auf Basis Biphenol A / 1,1-Bis-(4-hydroxyphenyl)-3,3,5-trimethylcyclohexan (Molverhältnis 65 : 35). Herstellung wie unter A.1.

Copolymerisat B

Styrol/Acrylnitril-Copolymerisat mit einem Styrol/Acrylnitril-Verhältnis von 72 : 28 und einer Grenzviskosität von 55 dl/g (Messung in Dimethylformamid bei 20°C).

Pfropfpolymerisat C

Pfropfpolymerisat von 50 Gew.-Teilen Styrol und Acrylnitril im Verhältnis 72 : 28 auf 50 Gew.-Teile teilchenförmigen Polybutadienkautschuk (mittlerer Teilchendurchmesser $d_{50}$ = 0,4 µm), hergestellt durch Emulsionspolymerisation.

Polycarbonat D

Lineares Polycarbonat auf Basis Bisphenol A mit einer relativen Lösungsviskosität von 1,26 bis 1,28, gemessen in $CH_2Cl_2$ bei 25°C und einer Konzentration von 0,5 g/ml.

Herstellung und Prüfung der Formmassen

A, B, C und gegebenenfalls D werden auf einem Doppelwellenextruder (ZSK 32 der Fa. Werner & Pfleiderer) bei Temperaturen von 250 bis 320°C aufgeschmolzen und homogenisiert.
Aus den Formmassen wurden auf einer Spritzgußmaschine Stäbe der Abmessung 80 x 10 x 4 mm (Verarbeitungstemperatur 260°C) hergestellt, an denen die Kerbschlagzähigkeit (nach Methode ISO 180) bei Zimmertemperatur und - 20°C gemessen wurde.
Die Wärmeformbeständigkeit nach Vicat B wird gemäß DIN 53 460 bestimmt.

Tabelle 1

| Zusammensetzung der Formmassen und ihre Eigenschaften | | | | | | |
|---|---|---|---|---|---|---|
| Beispiel | Komponenten (Gew.-%) | | | | Vicat B 120 (°C) | Kerbschlagzähigkeit $a_k$ bei 20°C (kJ/$m^2$) |
| | A.2 | B | C | D | | |
| 1 (Vergl.) | - | 16 | 24 | 60 | 122 | 49 |
| 2 | 60 | 16 | 24 | - | 135 | 78 |

Tabelle 2

| Zusammensetzung der Formmassen und ihre Eigenschaften | | | | | | | |
|---|---|---|---|---|---|---|---|
| Beispiel | Komponenten (Gew.-%) | | | | Vicat B 120 (°C) | Kerbschlagzähigkeit $a_k$ (kJ/$m^2$) | |
| | A.1 | B | C | D | | bei 20°C | bei -20°C |
| 3 (Vergl.) | - | 16 | 24 | 60 | 122 | 49 | 43 |
| 4 | 3 | 16 | 24 | 57 | 126 | 50 | 42 |

Tabelle 2 (fortgesetzt)

| Zusammensetzung der Formmassen und ihre Eigenschaften | | | | | | | |
|---|---|---|---|---|---|---|---|
| Beispiel | Komponenten (Gew.-%) | | | | Vicat B 120 (°C) | Kerbschlagzähigkeit $a_k$ (kJ/$m^2$) | |
| | A.1 | B | C | D | | bei 20°C | bei -20°C |
| 5 | 5 | 16 | 24 | 55 | 127 | 46 | 39 |
| 6 | 10 | 16 | 24 | 50 | 128 | 47 | 36 |
| 7 | 20 | 16 | 24 | 40 | 131 | 51 | 44 |
| 8 (Vergl.) | - | 11 | 16 | 73 | 133 | 57 | 47 |
| 9 | 3 | 11 | 16 | 70 | 135 | 58 | 46 |
| 10 | 5 | 11 | 16 | 68 | 137 | 52 | 45 |
| 11 | 10 | 11 | 16 | 63 | 138 | 54 | 46 |
| 12 | 20 | 11 | 16 | 53 | 143 | 51 | 38 |

## Patentansprüche

**1.** Als thermoplastische Formassen geeignete Mischungen aus

A. 3 bis 99 Gew.-Teilen eines aromatischen Polycarbonats, dessen bifunktionelle Carbonatstruktureinheiten zu mindestens 20 Mol-% der Formel (I) entsprechen

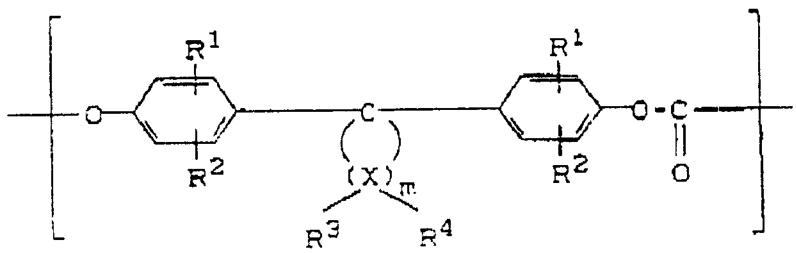

(I)

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl oder $C_7$-$C_{12}$-Aralkyl bedeuten,

m eine ganze Zahl von 4 bis 7 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit der Maßgbe, daß an mindestens einem Atom X $R^3$ und $R^4$ gleichzeitig Alkyl bedeuten,

B. 3 bis 95 Gew.-Teilen eines Copolymerisats aus

B.1 50 bis 98 Gew.-% Styrol, α-Methylstyrol, kernsubstituierten Styrolen, $C_1$-$C_8$-Alkyl-methacrylat, $C_1$-$C_8$-Alkylacrylat oder Mischungen daraus und

B.2 50 bis 2 Gew.-% Acrylnitril, Methacrylnitril, $C_1$-$C_8$-Alkylmethacrylat, $C_1$-$C_8$-Alkylacrylat, Maleinsäureanhy-

drid, N-substituierten Maleinimiden und Mischungen daraus,

C. 1 bis 95 Gew.-Teilen eines Pfropfpolymerisats von

C.1 5 bis 90 Gew.-Teilen einer Mischung aus

C.1.1 50 bis 98 Gew.-% Styrol, α-Methylstyrol $C_1$-$C_4$-Alkyl- oder Halogen-kernsubstituierten Styrolen, $C_1$-$C_8$-Alkylmethacrylat, $C_1$-$C_8$-Alkylacrylat oder Mischungen daraus und

C.1.2 5 bis 50 Gew.-%. Acrylnitril, Methacrylnitril, $C_1$-$C_8$-Alkylmethacrylat, $C_1$-$C_8$-Alkylacrylat, Maleinsäureanhydrid, $C_1$-$C_4$-Alkyl-oder Phenyl-N-substituierten Maleinimiden oder Mischungen daraus auf

C.2 10 bis 95 Gew.-Teils Dienkautschuk mit einem mittleren Teilchendurchmesser ($d_{50}$) von 0,09 bis 1 µm und einem Gelgehalt von mehr als 50 Gew.-%, wobei die Pfropfpolymerisate mit Hilfe von Radikalinitiatoren ausgewählt aus Hydroperoxiden und Persulfaten, erhältlich sind, und

D. 0 bis 80 Gew.-Teilen eines weiteren, von A verschiedenen aromatischen Polycarbonats.

**2.** Mischungen gemäß Anspruch 1, enthaltend 40 bis 98 Gew.-Teile A, 5 bis 50 Gew.-Teile 8 und 2 bis 60 Gew.-Teile C.

**3.** Mischungen gemäß Anspruch 1, worin die mittleren Teilehendurchmesser der Dienkautschuke C.2 0,09 bis 0,6 µm betragen.

**4.** Mischungen gemäß Anspruch 1, worin der Gelgehalt der Dienkautschuke C.2 mehr als 70 Gew.-% beträgt.

**5.** Mischungen gemäß Anspruch 1, enthaltend Stabilisatoren, Pigmente, Fließhilfsmittel, Entformungsmittel, Flammschutzmittel und/oder Antistatika.

**6.** Verwendung der Mischungen nach Anspruch 1 zur Herstellung von Formkörpern aller Art.

**7.** Verfahren zur Herstellung von thermoplastischen Formmassen durch Vermischen bei erhöhter Temperatur von

A. 3 bis 99 Gew.-Teilen eines aromatischen Polycarbonats, dessen bifunktionelle Carbonatstruktureinheiten zu mindestens 20 Mol-% der Formel (I) entsprechen

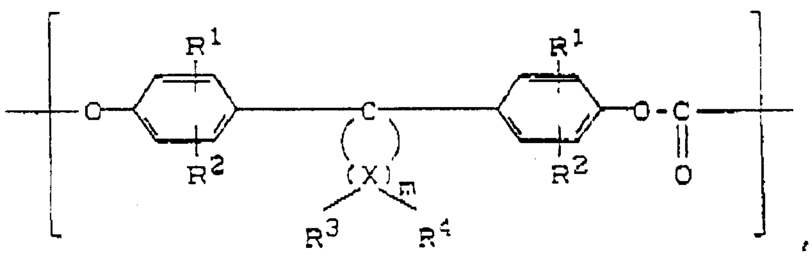

(I)

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl oder $C_7$-$C_{12}$-Aralkyl bedeuten,

m eine ganze Zahl von 4 bis 7 ist,

$R^3$ und $R^4$ für jedes X individuell wählbar sind und unabhängig voneinander Wasserstoff oder $C_1$-$C_6$-Alkyl bedeuten
und

X Kohlenstoff bedeutet,

mit der Maßgbe, daß an mindestens einem Atom X $R^3$ und $R^4$ gleichzeitig Alkyl bedeuten,

B. 3 bis 95 Gew.-Teilen eines Copolymerisats aus

B.1 50 bis 98 Gew.-% Styrol, α-Methylstyrol, kernsubstituierten Styrolen, $C_1$-$C_8$-Alkyl-methacrylat, $C_1$-$C_8$-Alkylacrylat oder Mischungen daraus und

B.2 50 bis 2 Gew.-% Acrylnitril, Methacrylnitril, $C_1$-$C_8$-Alkylmethacrylat, $C_1$-$C_8$-Alkylacrylat, Maleinsäureanhydrid, N-substituierten Maleinimiden und Mischungen daraus,

C. 1 bis 95 Gew.-Teilen eines Pfropfpolymerisats von

C.1 5 bis 90 Gew.-Teilen einer Mischung aus

C.1.1 50 bis 98 Gew.-% Styrol, α-Methylstyrol $C_1$-$C_4$-Alkyl- oder Halogen-kernsubstituierten Styrolen, $C_1$-$C_8$-Alkylmethacrylat, $C_1$-$C_8$-Alkylacrylat oder Mischungen daraus und

C.1.2 5 bis 50 Gew.-% Acrylnitril, Methacrylnitril, $C_1$-$C_8$-Alkylmelhacrylat, $C_1$-$C_8$-Alkylacrylat, Maleinsäureanhydrid, $C_1$-$C_4$-Alkyl-oder Phenyl-N-substituierten Maleinimiden oder Mischungen daraus auf

C.2 10 bis 95 Gew.-Teile Dienkautschuk mit einem mittleren Teilchendurchmesser ($d_{50}$) von 0,09 bis 1 µm und einem Gelgehalt von mehr als 50 Gew.-%, wobei die Pfropfpolymerisate mit Hilfe vor Radikalinitiatoren ausgewählt aus Hydroperoxiden und Persulfaten erhältlich sind,und

D. 0 bis 80 Gew.-Teilen eines weiteren, von A verschiedenen aromatischen Polycarbonats.

## Claims

**1.** Mixtures which are suitable as thermoplastic moulding compositions comprising

A. 3 to 99 parts by weight of an aromatic polycarbonate, the bifunctional carbonate structural units of which, to the extent of at least 20 mol.%, correspond to formula (I)

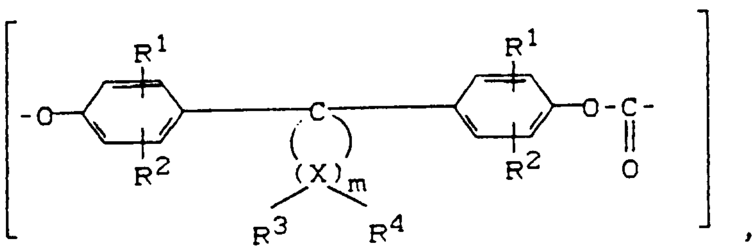 (I)

wherein

| | |
|---|---|
| $R^1$ and $R^2$, | independently of one another, denote hydrogen, halogen, $C_1$-$C_8$-alkyl, $C_5$-$C_6$-cycloalkyl, $C_6$-$C_{10}$-aryl or $C_7$-$C_{12}$-aralkyl, |
| m | is an integer from 4 to 7, |
| $R^3$ and $R^4$ | can be selected individually for each X and, independently of one another, denote hydrogen or $C_1$-$C_6$-alkyl, and |
| X | denotes carbon, |

with the proviso that $R^3$ and $R^4$ on at least one atom X simultaneously denote alkyl,

B. 3 to 95 parts by weight of a copolymer comprising

B.1 50 to 98 wt.% styrene, α-methylstyrene, ring-substituted styrenes, $C_1$-$C_8$-alkyl methacrylate, $C_1$-$C_8$-alkyl acrylate or mixtures thereof and

B.2 50 to 2 wt.% acrylonitrile, methacrylonitrile, $C_1$-$C_8$-alkyl methacrylate, $C_1$-$C_8$-alkyl acrylate, maleic anhydride, N-substituted maleimides and mixtures thereof,

C. 1 to 95 parts by weight of a graft polymer comprising

C.1 5 to 90 parts by weight of a mixture of

C.1.1 50 to 98 wt.% styrene, α-methylstyrene, styrenes substituted on the ring by $C_1$-$C_4$-alkyl or by halogen, $C_1$-$C_8$-alkyl methacrylate, $C_1$-$C_8$-alkyl acrylate or mixtures thereof and

C.1.2 5 to 50 wt.% acrylonitrile, methacrylonitrile, $C_1$-$C_8$-alkyl methacrylate, $C_1$-$C_8$-alkyl acrylate, maleic anhydride, $C_1$-$C_4$-alkyl- or phenyl-N-substituted maleimides or mixtures thereof and

C.2 10 to 95 parts by weight diene rubber having an average particle diameter ($d_{50}$) of 0.09 to 1 μm and a gel content of more than 50 wt.%, the graft polymers being obtainable with the aid of radical initiators selected from hydroperoxides and persulfates, and

D. 0 to 80 parts by weight of another aromatic polycarbonate which is different from A.

**2.** Mixtures according to claim 1, containing 40 to 98 parts by weight A, 5 to 50 parts by weight B and 2 to 60 parts by weight C.

**3.** Mixtures according to claim 1, wherein the average particle diameters of the diene rubbers C.2 are 0.09 to 0.6 μm.

**4.** Mixtures according to claim 1, wherein the gel content of the diene rubbers C.2 is more than 70 wt.%.

**5.** Mixtures according to claim 1, containing stabilisers, pigments, flow auxiliaries, mould release agents, flameproofing agents and/or antistatics.

**6.** Use of the mixtures according to claim 1 for the productions of all types of moulded articles.

**7.** Process for the preparation of thermoplastic moulding compositions by mixing together the following at elevated temperature:

A. 3 to 99 parts by weight of an aromatic polycarbonate, the bifunctional carbonate structural units of which, to the extent of at least 20 mol.%, correspond to formula (I)

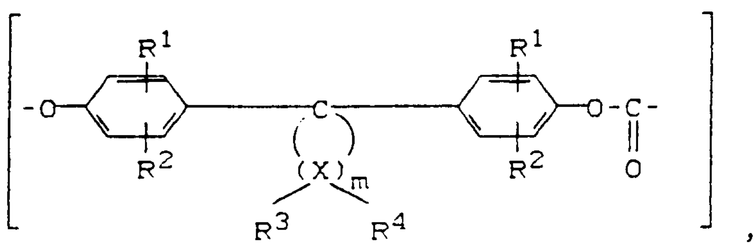

(I)

wherein

$R^1$ and $R^2$, independently of one another, denote hydrogen, halogen, $C_1$-$C_8$-alkyl, $C_5$-$C_6$-cycloalkyl, $C_6$-

$C_{10}$-aryl or $C_7$-$C_{12}$-aralkyl,

m is an integer from 4 to 7,

$R^3$ and $R^4$ can be selected individually for each X and, independently of one another, denote hydrogen or $C_1$-$C_6$-alkyl, and

X denotes carbon,

with the proviso that $R^3$ and $R^4$ on at least one atom X simultaneously denote alkyl,

B. 3 to 95 parts by weight of a copolymer comprising

B.1 50 to 98 wt.% styrene, α-methylstyrene, ring-substituted styrenes, $C_1$-$C_8$-alkyl methacrylate, $C_1$-$C_8$-alkyl acrylate or mixtures thereof and

B.2 50 to 2 wt.% acrylonitrile, methacrylonitrile, $C_1$-$C_8$-alkyl methacrylate, $C_1$-$C_8$-alkyl acrylate, maleic anhydride, N-substituted maleimides and mixtures thereof,

C. 1 to 95 parts by weight of a graft polymer comprising

C.1 5 to 90 parts by weight of a mixture of

C.1.1 50 to 98 wt.% styrene, α-methylstyrene, styrenes substituted on the ring by $C_1$-$C_4$-alkyl or halogen, $C_1$-$C_8$-alkyl methacrylate, $C_1$-$C_8$-alkyl acrylate or mixtures thereof and

C.1.2 5 to 50 wt.% acrylonitrile, methacrylonitrile, $C_1$-$C_8$-alkyl methacrylate, $C_1$-$C_8$-alkyl acrylate, maleic anhydride, $C_1$-$C_4$-alkyl- or phenyl-N-substituted maleimides or mixtures thereof and

C.2 10 to 95 parts by weight diene rubber having an average particle diameter ($d_{50}$) of 0.09 to 1 μm and a gel content of more than 50 wt.%, the graft polymers being obtainable with the aid of radical initiators selected from hydroperoxides and persulfates, and

D. 0 to 80 parts by weight of another aromatic polycarbonate which is different from A.

## Revendications

**1.** Mélanges appropriés comme compositions à mouler thermoplastiques, constitués de

A. 3 à 99 parties en masse d'un polycarbonate aromatique dont les unités constitutives carbonate bifonctionnelles correspondent à au moins 20 % en moi à la formule (I)

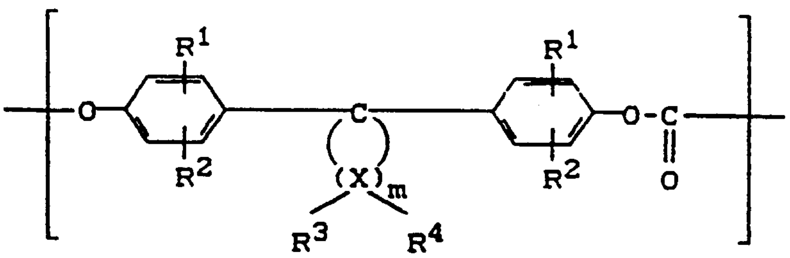

(I),

dans laquelle

$R^1$ et $R^2$ représentent indépendamment l'un de l'autre un atome d'hydrogène, un atome d'halogène, un reste alkyle en $C_1$-$C_8$, un reste cycloalkyle en $C_5$-$C_6$, un reste aryle en $C_6$-$C_{10}$ ou un reste aralkyle

| | |
|---|---|
| | en $C_7$-$C_{12}$, |
| m | est un nombre entier de 4 à 7, |
| $R^3$ et $R^4$ | peuvent être choisis individuellement pour chaque X et représentent indépendamment l'un de l'autre un atome d'hydrogène ou un reste alkyle en $C_1$-$C_6$, et |
| X | représente un atome de carbone, |

à condition que, sur au moins un atome X, $R^3$ et $R^4$ représentent en même temps un reste alkyle,
B. 3 à 95 parties en masse d'un composé constitué de

B.1 50 à 98 % en masse de styrène, d'α-méthylstyrène, de styrènes substitués sur le cycle, de méthacrylate d'alkyle en $C_1$-$C_8$, d'acrylate d'alkyle en $C_1$-$C_8$ ou de leurs mélanges et
B.2 50 à 2 % en masse d'acrylonitrile, de méthacrylonitrile, de méthacrylate d'alkyle en $C_1$-$C_8$, d'acrylate d'alkyle en $C_1$-$C_8$, d'anhydride maléique, de maléimides N-substitués et de leurs mélanges,

C. 1 à 95 parties en masse d'un polymère greffé par

C.1. 5 à 90 parties en masse d'un mélange constitué de

C.1.1. 50 à 98 % en masse de styrène, d'α-méthylstyrène, de styrènes substitués sur le cycle par alkyle en $C_1$-$C_4$ ou halogène, de méthacrylate d'alkyle en $C_1$-$C_8$, d'acrylate d'alkyle en $C_1$-$C_8$ ou de leurs mélanges et
C.1.2. 5 à 50 % en masse d'acrylonitrile, de méthacrylonitrile, de méthacrylate d'alkyle en $C_1$-$C_8$, d'acrylate d'alkyle en $C_1$-$C_8$, d'anhydride maléique, de maléimides N-substitués par alkyle en $C_1$-$C_4$ ou phényle ou de leurs mélanges,

sur
C.2. 10 à 95 parties en masse de caoutchouc diène ayant un diamètre de particules moyen ($d_{50}$) de 0,09 à 1 µm et une teneur en gel supérieure à 50 % en masse,
les polymères greffés pouvant être obtenus à l'aide d'amorceurs de radicaux choisis parmi des hydroperoxydes et des persulfates, et

D. 0 à 80 parties en masse d'un autre polycarbonate aromatique, différent de A.

**2.** Mélanges selon la revendication 1, contenant 40 à 98 parties en masse de A, 5 à 50 parties en masse de B et 2 à 60 parties en masse de C.

**3.** Mélanges selon la revendication 1, dans lesquels le diamètre moyen des particules des caoutchoucs diènes C.2 est de 0,09 à 0,6 µm.

**4.** Mélanges selon la revendication 1, dans lesquels la teneur en gel des caoutchoucs diènes C.2 est supérieure à 70 % en masse.

**5.** Mélanges selon la revendication 1, contenant des stabilisants, des pigments, des agents d'écoulement, des agents de démoulage, des agents ignifuges et/ou des antistatiques.

**6.** Utilisation des mélanges selon la revendication 1 pour la préparation d'objets moulés de toutes sortes.

**7.** Procédé de préparation de compositions à mouler thermoplastiques par mélange à haute température de

A. 3 à 99 parties en masse d'un polycarbonate aromatique dont les unités constitutives carbonate bifonctionnelles correspondent à au moins 20 % en mol à la formule (I)

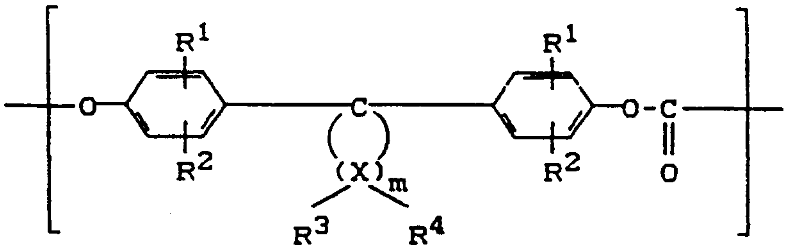

(I),

dans laquelle

$R^1$ et $R^2$ représentent indépendamment l'un de l'autre un atome d'hydrogène, un atome d'halogène, un reste alkyle en $C_1$-$C_8$, un reste cycloalkyle en $C_5$-$C_6$, un reste aryle en $C_6$-$C_{10}$ ou un reste aralkyle en $C_7$-$C_{12}$,

m est un nombre entier de 4 à 7,

$R^3$ et $R^4$ peuvent être choisis individuellement pour chaque X et représentent indépendamment l'un de l'autre un atome d'hydrogène ou un reste alkyle en $C_1$-$C_6$, et

X représente un atome de carbone,

à condition que, sur au moins un atome X, $R^3$ et $R^4$ représentent en même temps un reste alkyle,

B. 3 à 95 parties en masse d'un composé constitué de

B.1 50 à 98 % en masse de styrène, d'α-méthylstyrène, de styrènes substitués sur le cycle, de méthacrylate d'alkyle en $C_1$-$C_8$, d'acrylate d'alkyle en $C_1$-$C_8$ ou de leurs mélanges et

B.2 50 à 2 % en masse d'acrylonitrile, de méthacrylonitrile, de méthacrylate d'alkyle en $C_1$-$C_8$, d'acrylate d'alkyle en $C_1$-$C_8$, d'anhydride maléique, de maléimides N-substitués et de leurs mélanges,

C. 1 à 95 parties en masse d'un polymère greffé par

C.1. 5 à 90 parties en masse d'un mélange constitué de

C.1.1. 50 à 98 % en masse de styrène, d'α-méthylstyrène, de styrènes substitués sur le cycle par alkyle en $C_1$-$C_4$ ou halogène, de méthacrylate d'alkyle en $C_1$-$C_8$, d'acrylate d'alkyle en $C_1$-$C_8$ ou de leurs mélanges et

C.1.2. 5 à 50 % en masse d'acrylonitrile, de méthacrylonitrile, de méthacrylate d'alkyle en $C_1$-$C_8$, d'acrylate d'alkyle en $C_1$-$C_8$, d'anhydride maléique, de maléimides N-substitués par alkyle en $C_1$-$C_4$ ou phényle ou de leurs mélanges,

sur

C.2. 10 à 95 parties en masse de caoutchouc diène ayant un diamètre de particules moyen ($d_{50}$) de 0,09 à 1 μm et une teneur en gel supérieure à 50 % en masse,

les polymères greffés pouvant être obtenus à l'aide d'amorceurs de radicaux choisis parmi des hydroperoxydes et des persulfates, et

D. 0 à 80 parties en masse d'un autre polycarbonate aromatique, différent de A.